Europäisches Patentamt

European Patent Office

Office européen des brevets

(11) Veröffentlichungsnummer: **0 249 591**
**A2**

## (12) EUROPÄISCHE PATENTANMELDUNG

(21) Anmeldenummer: 87890126.3

(22) Anmeldetag: 09.06.87

(51) Int. Cl.⁴: **G 01 C 3/00**
G 01 B 7/02, B 60 Q 1/52

(30) Priorität: 11.06.86 AT 1581/86

(43) Veröffentlichungstag der Anmeldung:
16.12.87 Patentblatt 87/51

(84) Benannte Vertragsstaaten:
AT BE CH DE ES FR GB GR IT LI LU NL SE

(71) Anmelder: **Marek, Jiri**
**Weilburgstrasse 103/6**
**A-2500 Baden (AT)**

(72) Erfinder: **Marek, Jiri**
**Weilburgstrasse 103/6**
**A-2500 Baden (AT)**

(74) Vertreter: **Matschnig, Franz, Dipl.-Ing.**
**Siebensterngasse 54 Postfach 452**
**A-1071 Wien (AT)**

Ein Antrag gemäss Regel 88 EPÜ auf Berichtigung der Patentansprüche liegt vor. Über diesen Antrag wird im Laufe des Verfahrens vor der Prüfungsabteilung eine Entscheidung getroffen werden (Richtlinien für die Prüfung im EPA, A-V, 2.2).

(54) **Verfahren zur Messung und Anzeige des Abstandes eines Kraftfahrzeuges von einem Hindernis und kapazitiver Messwertgeber für Kraftfahrzeuge.**

(57) Dieser kapazitive Näherungsgeber für Kraftfahrzeuge besitzt eine Kapazitätsmeßeinrichtung zur Messung der Kapazität zwischen zumindest einer kraftfahrzeugfesten Kondensatorplatte (1) und der Umgebung sowie eine Anzeigevorrichtung, der das Ausgangssignal der Meßeinrichtung (3) zugeführt ist.

Um einen Näherungsgeber zu schaffen, der in besonderer Weise die in der Praxis auftretenden störenden und parasitären Kapazitäten berücksichtigt, ist vorgesehen, daß das Ausgangssignal ($S_c$) der Kapazitätsmeßeinrichtung (5) einem Verstärker (6) zugeführt wird, der eine Gegenkopplungsschleife (9) mit einem Speicherglied (11) und einem Schalter (10) enthält und hiedurch das Ausgangssignal ($s_A$) des Verstärkers (6) im normalen Fahrbetrieb konstant gehalten wird und daß zur Messung der Schalter (10) und hiedurch die Gegenkopplungsschleife (9) geöffnet und nach beendeter Messung wieder geschlossen wird.

Fig. 2

# Beschreibung

## Verfahren zur Messung und Anzeige des Abstandes eines Kraftfahrzeuges von einem Hindernis und kapazitiver Meßwertgeber für Kraftfahrzeuge

Die Erfindung bezieht sich auf ein Verfahren zur Messung und Anzeige des Abstandes eines Kraftfahrzeuges von einem Hindernis durch Messung der Kapazität zwischen einer kraftfahrzeugfesten Kondensatorplatte und der Umgebung mittels einer Kapazitätsmeßeinrichtung sowie auf einen kapazitiven Näherungsgeber für Kraftfahrzeuge mit einer Kapazitätsmeßeinrichtung zur Messung der Kapazität zwischen zumindest einer kraftfahrzeugfesten Kondensatorplatte und der Umgebung und mit einer Anzeigevorrichtung, der das Ausgangssignal der Meßeinrichtung zugeführt ist.

Ein derartiger Näherungsgeber ist in der DE-OS 2 044 790 beschrieben. Hiebei soll eine Brückenschaltung störende bzw. parasitäre Kapazitäten eliminieren. Es ist zwar möglich, mit Hilfe bestimmter Wechselstrombrücken auch große Störkapazitäten zu eliminieren, doch wird andererseits eine solche Brücke bei Änderungen der Wechselstromwiderstände in ihren Zweigen sehr rasch und stark verstimmt, sodaß sie letztlich außerhalb des möglichen Abgleichbereiches gelangt. Es ist vor allem zu berücksichtigen, daß beim Einsatz in Kraftfahrzeugen ständig wechselnde Umwelteinflüsse auftreten. Hiezu kommt auch z.B. die Änderung der Kapazität des Kraftfahrzeuges gegen den Boden bei verschiedenen Beladungen des Fahrzeuges. Diese Änderungen liegen oft eine Größenordung über den zu messenden Kapazitätsänderungen der Kondensatorplatte. Auch parasitäre Widerstände treten auf und ändern ständig ihren Wert, wobei in dieser Hinsicht z.B. an Salzwassereinflüsse im Winter gedacht werden muß. Insgesamt zeigt sich, daß die bekannte Brückenschaltung wohl zur Kompensation der parasitären Kapazität einer geschirmten Leitung geeignet ist, welche den Geber mit der Brücke verbindet, daß diese Brückenschaltung jedoch nicht die ständig wechselnden parasitären Widerstände und Kapazitäten außerhalb des Kraftfahrzeuges berücksichtigt.

Ziel der Erfindung ist die Schaffung eines Meßverfahrens sowie eines kapazitiven Näherungsgebers, der in besonderer Weise die in der Praxis auftretenden störenden und parasitären Kapazitäten berücksichtigt.

Dieses Ziel läßt sich mit einem Verfahren der eingangs genannten Art erreichen, bei welchem erfindungsgemäß das Ausgangssignal der Kapazitätsmeßeinrichtung einem Verstärker zugeführt wird, der eine Gegenkopplungsschleife mit einem Speicherglied und einem Schalter enthält und hiedurch das Ausgangssignal des Verstärkers im normalen Fahrbetrieb konstant gehalten wird und daß zur Messung der Schalter und hiedurch die Gegenkopplungsschleife geöffnet und nach beendeter Messung wieder geschlossen wird.

Das Ziel wird weiters mit einem Näherungsgeber wie oben erwähnt erreicht, bei dem die feste Kondensatorplatte als Tafel, insbesondere als Kennzeichentafel, an der Karosserie des Kraftfahrzeuges bzw. als elektrisch leitende Schicht vor oder hinter einer solchen Tafel ausgebildet ist, die Meßeinrichtung eine Gegenkopplungsregelschleife aufweist, ein Speicher zur Abspeicherung des jeweiligen Gegenkopplungssignals (Regelabweichung) vorgesehen ist und daß die Regelschleife mittels eines Schalters unterbrechbar ist, der von dem Fahrer unmittelbar oder mittelbar, z.B. bei Einlegen eines Rückwärtsganges, betätigbar ist.

Die Erfindung geht somit davon aus, daß bei Verwendung einer Tafel als Kondensatorplatte, wobei es sich vorteilhafterweise um die Kennzeichentafel handelt, der Ausgang der Meßeinrichtung üblicherweise über eine Gegenkopplungsschleife auf einen bestimmten Wert geregelt wird, wobei der jeweilige letzte Wert der Regelabweichung (entspricht dem Gegenkopplungssignal) abgespeichert wird. Erst dann, wenn der Näherungsgeber tatsächlich zum Einsatz kommen soll, d.h. zum Beispiel beim Einparken und Einlegen des Retourganges, wird die Regelschleife mittels eines Schalters unterbrochen. Nun werden Abweichungen der Kapazität von dem zuletzt ermittelten Wert angezeigt, sie können beispielsweise direkt an einem Meßgerät abgelesen oder einem Grenzwertkomparator zugeführt werden. Nach Beendigung des Parkvorganges wird durch Betätigung des Schalters die Regelschleife wieder geschlossen.

Die erfindungsgemäße Lösung darf nicht mit einem Brückennullabgleich verwechselt werden, wie er z.B. in der DE-OS 27 37 110, Seite 4, 5. Abs. erwähnt ist. Ein solcher Nullabgleich zur Kompensation z.B. von Umgebungskapazitäten ist nicht vergleichbar mit einer Gegenkopplungsregelung und Abspeicherung des jeweils letzten Meßwertes.

Eine vorteilhafte Weiterbildung der Erfindung zeichnet sich dadurch aus, daß die Anzeigevorrichtung einen Grenzwertkomparator für das Ausgangssignal der Meßeinrichtung aufweist.

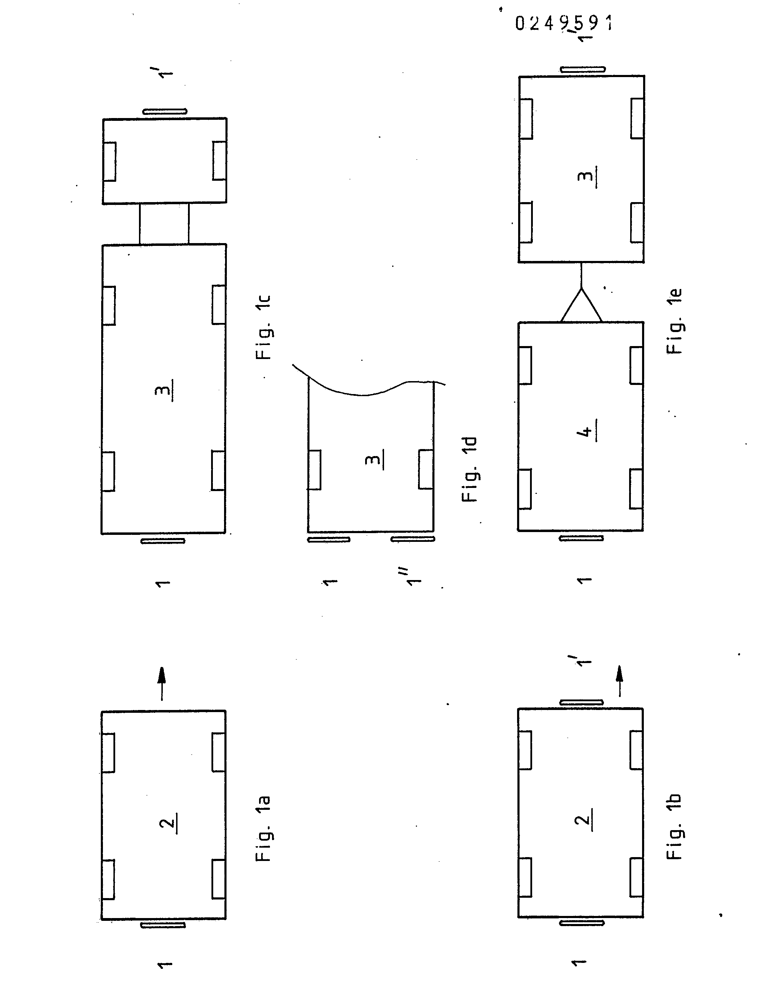

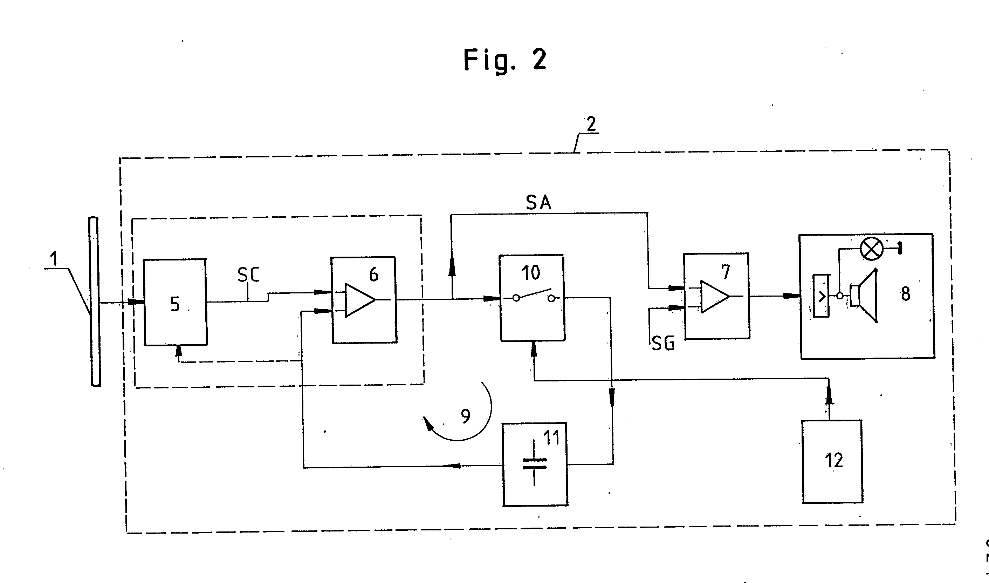

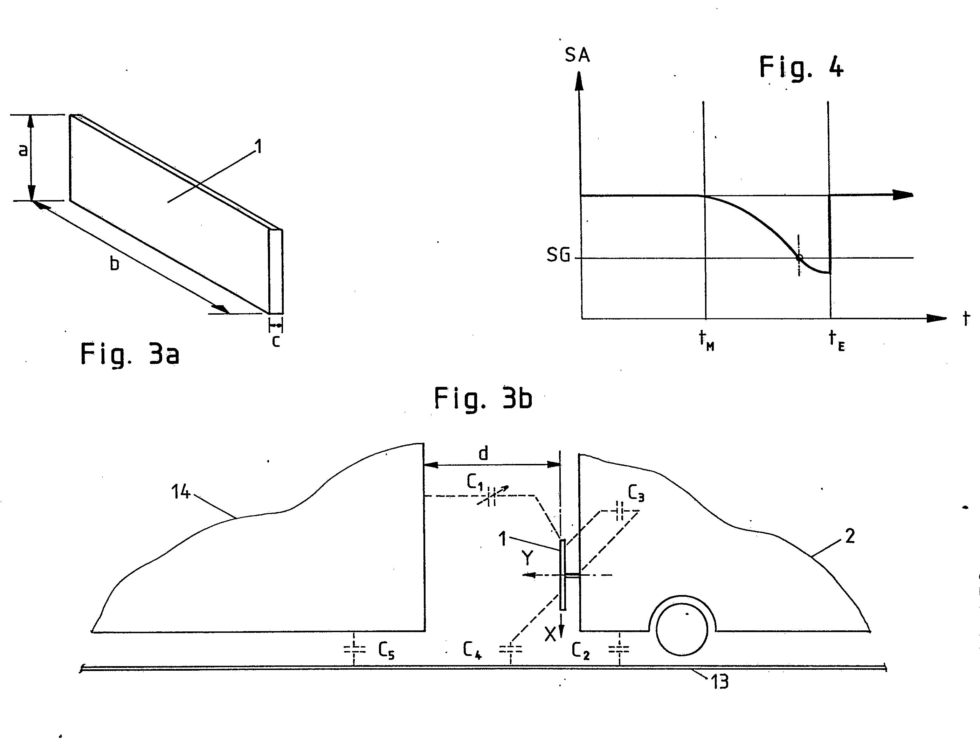

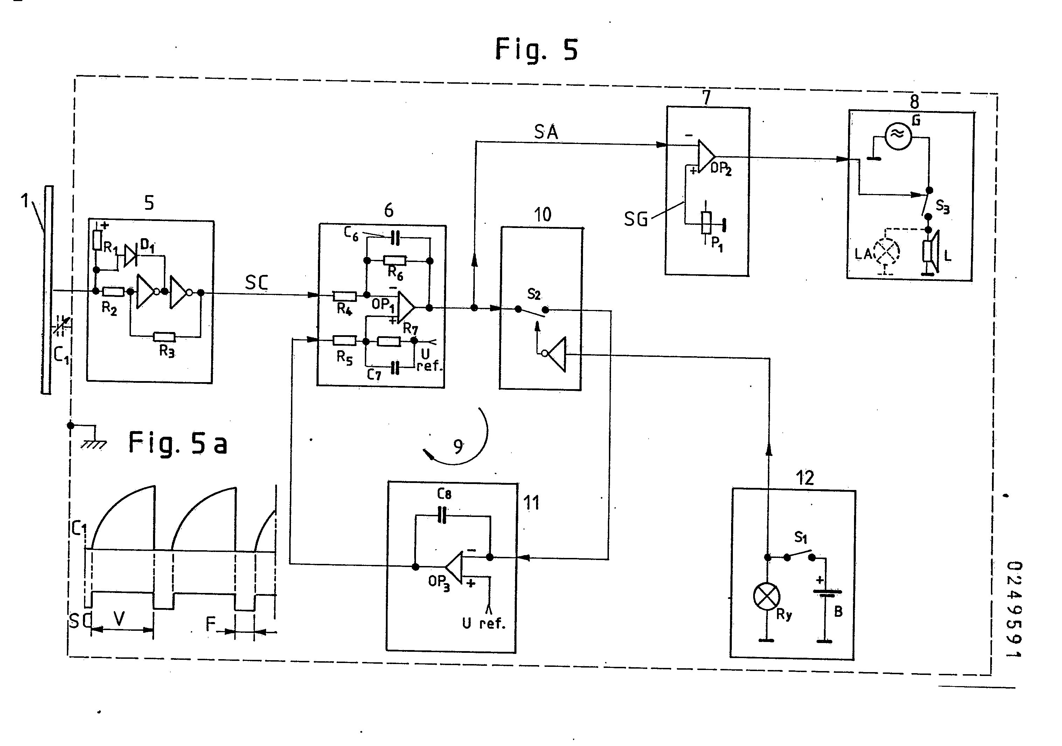

Die Erfindung samt ihren weiteren Vorteilen und Merkmalen ist im folgenden an Hand beispielsweiser Ausführungsformen näher erläutert, die in der Zeichnung veranschaulicht sind. In dieser zeigen Fig. 1a bis Fig. 1e in schematischer Draufsicht verschiedene Möglichkeiten der Anordnung einer Kondensatorplatte an Kraftfahrzeugen, Fig. 2 ein Blockschaltbild der Elektronik des Näherungsgebers, Fig. 3a und b in schematischer Seitenansicht die geometrischen bzw. kapazitiven Verhältnisse zwischen der Kondensatorplatte und ihrer Umgebung, Fig. 4 den zeitlichen Verlauf des Ausgangssignales des Näherungsgebers vor und während des Meßvorganges, Fig. 5 eine Schaltung nach Fig. 2 in näherem Detail und Fig. 5a zwei Signaldiagramme.

Gemäß Fig. 1a ist eine Kondensatorplatte 1 des erfindungsgemäßen Näherungsgebers an der Hinterseite eines Kraftfahrzeuges 2 angebracht. Als Kondensatorplatte 1 ist vorteilhafterweise die hintere Kennzeichentafel verwendet, die zu diesem Zweck bezüglich der Karosserie isoliert befestigt ist.

Fig. 1b zeigt je eine Kondensatorplatte 1 bzw. 1' an der Hinter- bzw. Vorderseite eines Kraftfahrzeuges 2, Fig. 1c eine Kondensatorplatte 1 bzw. 1' an der Hinter- bzw. Vorderseite eines Lastkraftwagens 3 mit Anhänger 4, wobei eine Kondensatorplatte 1 an der Hinterseite des Anhängers 4 und eine Kondensatorplatte 1' an der Vorderseite des Lastkraftwagens 3 angeordnet ist.

Als Kondensatorplatte bzw. -platten können nicht nur die Kennzeichentafeln sondern auch andere Tafeln, z.B. Werbetafeln etc. verwendet werden. Die Kondensatorplatte kann alternativ von einer dünnen leitenden Oberflächenbeschichtung an der Hinter- oder der Vorderseite einer Tafel gebildet sein, wobei diese Beschichtung im letzteren Fall durchsichtig bzw. durchscheinend sein sollte.

Dem Blockschaltbild nach Fig. 2 ist zu entnehmen, daß die Kondensatorplatte 1 mit dem Eingang einer Kapazitätsmeßeinrichtung 5 verbunden ist. Diese Meßeinrichtung 5 entspricht einer im wesentlichen beliebigen Kapazitätsmeßeinrichtung nach dem Stand der Technik und liefert ein Ausgangsmeßsignal $s_C$ (z.B. Spannung oder Strom), das eine Funktion der zwischen der Kondensatorplatte 1 und der Umgebung (Masse) gemessenen Kapazität ist.

Das Meßsignal $s_C$ wird einem Eingang eines Verstärkers 6 zugeführt, dessen Ausgang, an dem ein Signal $s_A$ auftritt, mit einem Eingang eines Komparators 7 verbunden ist. An dem anderen Eingang dieses Komparators 7 liegt ein festes Grenzwertsignal $s_G$. Der Ausgang des Komparators ist zu einer Anzeigeeinrichtung 8 geführt, die z.B. ein optisches oder akustisches Signal abzugeben in der Lage ist.

Das Ausgangssignal $s_A$ des Verstärkers 6 wird über eine Gegenkopplungsschleife 9 an einen zweiten Eingang des Verstärkers 6 zurückgeführt. In der Schleife 9 sind ein Schalter 10 und ein Speicherglied 11 vorgesehen. Der Schalter 10 ist von einer Betätigungsvorrichtung 12 aus direkt oder indirekt betätigbar, wobei diese Betätigungseinrichtung beispielsweise von dem Schalter für den Rückwärtsgangs gebildet sein oder ein eigener Schalter am Armaturenbrett sein kann. Die Gegenkopplung über die Schleife 9 weist einen Gegenkopplungsfaktor eins auf, sodaß bei geschlossenem Schalter 10 das Ausgangssignal $s_A$ einen konstanten Wert, unabhängig von dem Meßsignal $s_C$, beibehält. Wie in Fig. 2 strichliert angedeutet, kann die Gegenkopplung erforderlichenfalls auch auf die Meßeinrichtung 5 wirken.

Bevor die Funktion der Schaltung erläutert wird, sei auf Fig. 3a und b verwiesen. Die Kondensatorplatte 1, z.B. die Kennzeichentafel, weist eine Höhe a, eine Länge b und eine Dicke c auf. Bei der in Fig. 3b und c gezeigten Anbringung der Platte 1 weist die Platte mit einer Fläche $X = b \cdot c$ gegen den Boden 13 und mit einer Fläche $Y = a \cdot b$ nach hinten (oder vorne), z.B. gegen ein Hindernis 14. Es ist verständlich, daß die Fläche Y wegen der verhältnismäßig geringen Dicke c der Platte 1 wesentlich größer ist, als die dem Boden 13 zugewandte Fläche X.

Zwischen der Tafel 1 und dem in einem Abstand d befindlichen Hindernis 14 (z.B einem anderen Kraftfahrzeug) liegt eine sich während der Annäherung stark ändernde Kapazität $C_1$ vor. Das Kraftfahrzeug 2 besitzt eine Kapazität $C_2$ gegenüber dem Boden 13 und zwischen der Platte 1 und dem Kraftfahrzeug 2 liegt eine (verhältnismäßig große) Kapazität $C_3$ vor. Zwischen der Tafel 1 und dem Boden besteht eine unerwünschte parasitäre Kapazität $C_4$, deren Wert sich mit dem Bodenabstand des Kraftfahrzeuges 2 ändert. Zwischen dem Hindernis 14 und dem Boden 13 kann eine kapazitive Kopplung $C_5$ bestehen. Es ist anzumerken, daß sich die Kapazitäten $C_2$, $C_3$, $C_4$ und $C_5$ bei einer Änderung des Abstandes d nicht oder nur minimal ändern, wogegen die für die Messung wesentliche Kapazität $C_1$ direkt von dem Abstand d abhängt.

Der Näherungsgeber nach der Erfindung arbeitet wie folgt. Im normalen Betrieb des Kraftfahrzeuges bleibt der Schalter 10 geschlossen. Die Meßeinrichtung 5 liefert zwar ein sich ständig änderndes Meßsignal $s_C$, doch bleibt das Ausgangssignal $s_A$ des Verstärkers 6 unverändert. Die jeweilige Größe des Gegenkopplungssignals, d.h. die Regelabweichung, wird jedoch in dem Speicherglied 11, z.B. einem Kondensatorspeicher abgespeichert.

Wenn, etwa beim Einparken, der Näherungsgeber in Tätigkeit treten soll, wird der Schalter 10 und damit die Gegenkopplungsschleife geöffnet. Dies kann z.B. bei Einlegen des Rückwärtsganges über den Schalter für den Rückfahrscheinwerfer oder auf direkten Befehl des Fahrers erfolgen. In diesem Augenblick ändert sich das Ausgangssignal $s_A$ noch nicht, da am Gegenkopplungseingang des Verstärkers 6 der zuletzt im Speicherglied 11 abgespeicherte Wert liegt. Jede hierauf, vor allem durch Annäherung an das Hindernis 14 erfolgende Änderung der von der Tafel 1 erfaßten Kapazität ändert nun jedoch das Ausgangssignal $s_A$, wie in Fig. 4 gezeigt, in welcher mit $t_m$ der Zeitpunkt des Öffnens des Schalters 10 bezeichnet ist.

Soferne ein Komparator 7 vorgesehen ist, wird nach Über-oder Unterschreiten des festen Grenzwertsignales $s_G$ über die Anzeigeeinrichtung 8 ein Signal für den Fahrer abgegeben, dem dadurch mitgeteilt wird, daß er einen bestimmten Abstand zum Hindernis unterschritten hat. Nach Schließen des Schalters 10 (Zeitpunkt $t_E$ in Fig. 4) liegt wieder eine geschlossene Regel(Gegenkopplungs)schleife vor und der Geber ist für die nächste Messung bereit.

Obwohl die Kapazität $C_3$ zwischen der Tafel 1 und der Karosserie des Kraftfahrzeuges 2 in der Größenordnung von 100pF, die zu erfassende Änderung der Kapazität $C_1$ jedoch in der Größenordnung von 0,1pF liegt, ist dank der Erfindung eine verläßliche Auswertung dieser Änderung möglich, wobei wesentlich ist, daß der eigentliche Meßvorgang auf die kurze Zeit während des Einparkens beschränkt wird, sodaß Langzeitänderungen der übrigen Kapazitäten, insbesondere der Kapazitäten $C_2$ und $C_3$, nicht ins Gewicht fallen. Beispielsweise kann ein Verbiegen der Kennzeichentafel (Tafel 1) zu einer Änderung der Kapazität $C_3$ und eine höhere Beladung des Kraftfahrzeuges zu einer Vergrößerung von $C_2$ führen; die Einsatzfähigkeit des Gebers wird hiedurch jedoch nicht nachteilig beeinflußt.

In Fig. 5 ist eine Schaltung nach Fig. 2 in näherem Detail gezeigt und nachstehend beschrieben. Die Meßeinrichtung 5 enthält einen Widerstand $R_1$, der einerseits an einer Gleichspannung liegt und andererseits mit der festen Tafel 1 verbunden ist. Der Kondensator $C_1$ wird über den Widerstand $R_1$ aufgeladen, bis der über $R_2$ angesteuerte Schmitt-Trigger umschaltet, wobei die Umschaltspannung durch die Widerstände $R_2$ und $R_3$ bestimmt ist. Nun entlädt sich $C_1$ über die Diode $D_1$. Das Meßsignal $s_c$ zeigt somit ein variables, von der Größe des Kondensators $C_1$ abhängiges Tastverhältnis.

Der Verstärker 6 beinhaltet einen Operationsverstärker $OP_1$ mit Integration durch das RC-Glied $C_6$, $R_6$. Die Verstärkung ist durch die Widerstände $R_4$ und $R_6$ festgelegt. Das Ausgangssignal $s_A$ des Verstärkers ist eine Spannung, die von dem Tastverhältnis des Signales $s_c$ abhängt.

Über den gesteuerten Schalter 1O wird das Ausgangssignal $s_A$ dem Speicherglied 11 zugeführt, und zwar dem invertierenden Eingang eines Operationsverstärkers $OP_3$. An dem nicht invertierenden Eingang liegt eine Referenzspannung $U_{ref}$. Der Ausgang des Verstärkers ist mit seinem invertierenden Eingang über einen Kondensator $C_8$ verbunden, dessen Spannung der Regelabweichung entspricht, somit jener Spannung, die notwendig ist, um - zugeführt über $R_5$ - den Verstärker $OP_1$ in einen Zustand zu bringen, bei dem ein konstantes Ausgangssignal $s_A$ vorliegt. Am nichtinvertierenden Eingang des Verstärkers $OP_1$ liegt außerdem über das RC-Glied $R_7$, $C_7$ eine Referenzspannung $U_{ref}$.

Bei Schließen des Schalters $S_1$ (in der Betätigungseinrichtung 12), hier der Schalter für die Rückfahrscheinwerfer, wird die Spannung der Autobatterie B an die Rückfahrscheinwerfer $R_V$ gelegt und hiedurch der gesteuerte Schalter $S_2$ geöffnet.

Der Komparator 7 vergleicht mittels eines Verstärkers $OP_2$ das Signal $s_A$, das an dem invertierenden Eingang liegt, mit der Grenzwertspannung $S_G$, die an dem nicht invertierenden Eingang liegt und die mit Hilfe eines Potentiometers $P_1$ einstellbar ist.

Das Ausgangssignal des Komparators 7 betätigt einen gesteuerten Schalter $S_3$ der Anzeigevorrichtung, sodaß beispielsweise ein Tonfrequenzgenerator G mit einem Lautsprecher L oder - nur strichliert angedeutet - eine Anzeigelampe $L_A$ mit einer Spannung verbunden werden.

Die in Fig. 5 gezeigte Schaltung stellt bloß ein Ausführungsbeispiel der Erfindung dar, die ebenso auf andere Weise unter Verwendung bekannter Baugruppen der Elektronik bzw. unter Verwendung von Mikro Computern und entsprechender Software realisierbar ist.

## Patentansprüche

1. Verfahren zur Messung und Anzeige des Abstandes eines Kraftfahrzeuges von einem Hindernis durch Messung der Kapazität zwischen einer kraftfahrzeugfesten Kondensatorplatte und der Umgebung mittels einer Kapazitätsmeßeinrichtung, dadurch gekennzeichnet, daß das Ausgangssignal ($S_c$) der Kapazitätsmeßeinrichtung (5) einem Verstärker (6) zugeführt wird, der eine Gegenkopplungsschleife (9) mit einem Speicherglied (11) und einem Schalter (1O) enthält und hiedurch das Ausgangssignal ($s_A$) des Verstärkers (6) im normalen Fahrbetrieb konstant gehalten wird und daß zur Messung der Schalter (1O) und hiedurch die Gegenkopplungsschleife (9) geöffnet und nach beendeter Messung wieder geschlossen wird.

2. Kapazitiver Näherungsgeber für Kraftfahrzeuge mit einer Kapazitätsmeßeinrichtung zur Messung der Kapazität zwischen zumindest einer kraftfahrzeugfesten Kondensatorplatte und der Umgebung und mit einer Anzeigevorrichtung, der das Ausgangssignal der Meßeinrichtung zugeführt ist, dadurch gekennzeichnet, daß die feste Kondensatorplatte als Tafel (1), insbesondere als Kennzeichentafel, an der Karosserie des Kraftfahrzeuges bzw. als elektrisch leitende Schicht vor oder hinter einer solchen Tafel ausgebildet ist, die Meßeinrichtung (3) eine Gegenkopplungsregelschleife (8) aufweist, ein Speicher (4) zur Abspeicherung des jeweiligen Gegenkopplungssignals (Regelabweichung) vorgesehen ist und daß die Regelschleife (8) mittels eines Schalters (7) unterbrechbar ist, der von dem Fahrer unmittelbar oder mittelbar, z.B. bei Einlegen eines Rückwärtsganges, betätigbar ist.

3. Näherungsgeber nach Anspruch 2, dadurch gekennzeichnet, daß die Anzeigevorrichtung einen Grenzwertkomparator (5) für das Ausgangssignal der Meßeinrichtung (3) aufweist.

0249591

Fig. 1a

Fig. 1b

Fig. 1c

Fig. 1d

Fig. 1e

## Fig. 2

02495911

Fig. 3a

Fig. 4

Fig. 3b

0249591

Fig. 5

Fig. 5a

0249591